# EUROPÄISCHE PATENTSCHRIFT

(11) **EP 3 678 913 B1**
(45) Veröffentlichungstag und Bekanntmachung des Hinweises auf die Patenterteilung: **08.02.2023**
(21) Anmeldenummer: 18765039.5
(22) Anmeldetag: 22.08.2018
(51) Int. Cl.: B60W 50/08, B60W 50/14, B60W 30/17

(54) **VERFAHREN ZUM BETRIEB EINES FAHRERASSISTENZSYSTEMS EINES KRAFTFAHRZEUGS UND KRAFTFAHRZEUG**
METHOD FOR OPERATING A DRIVER ASSISTANCE SYSTEM OF A MOTOR VEHICLE AND MOTOR VEHICLE
PROCÉDÉ POUR FAIRE FONCTIONNER UN SYSTÈME D'AIDE À LA CONDUITE D'UN VÉHICULE À MOTEUR ET VÉHICULE À MOTEUR

(30) Priorität: 05.09.2017 DE 102017215542
(43) Veröffentlichungstag der Anmeldung: 15.07.2020
(73) Patentinhaber: Audi AG, 85045 Ingolstadt (DE)
(72) Erfinder: LIMBACHER, Reimund, 85055 Ingolstadt (DE)
(86) Internationale Anmeldenummer: PCT/EP2018/072628
(87) Internationale Veröffentlichungsnummer: WO 2019/048231

(56) Entgegenhaltungen:
- EP-A1- 2 916 190
- EP-A1- 3 231 682
- WO-A1-2015/049231
- DE-A1-102014 212 596
- DE-A1-102015 004 469
- DE-A1-102016 108 812

## Beschreibung

Die Erfindung betrifft ein Verfahren zum Betrieb eines eine Fahrerassistenzfunktion realisierenden Fahrerassistenzsystems eines Kraftfahrzeugs, welche Fahrerassistenzfunktion nur bei Erfüllung wenigstens eines Aktivierungskriteriums fahrerseitig aktivierbar ist und bei Erfüllung wenigstens eines Deaktivierungskriteriums automatisch deaktiviert wird, wobei bei Aktivierbarkeit des Fahrerassistenzsystems eine die Aktivierbarkeit anzeigende Aktivierbarkeitsinformation an den Fahrer ausgegeben wird und eine voraussichtliche Aktivitätszeit bis zum Eintritt eines Deaktivierungskriteriums ermittelt und gemeinsam mit der Aktivierbarkeitsinformation ausgegeben wird. Daneben betrifft die Erfindung ein Kraftfahrzeug.

Es sind verschiedene Fahrerassistenzsysteme bekannt, die den Fahrer beim Betreiben eines Kraftfahrzeugs unterstützen. Dabei sind insbesondere zur wenigstens teilweisen, insbesondere vollständig, automatischen Fahrzeugführung ausgebildete Fahrerassistenzfunktionen zu nennen, die fahrerseitig aktiviert werden können, wenn der für sie vorgesehene Einsatzbereich vorliegt. Damit eine Aktivierung möglich ist, muss wenigstens eine Aktivierungsbedingung erfüllt sein, wobei bei mehreren Aktivierungsbedingungen üblicherweise alle Aktivierungsbedingungen erfüllt sein müssen. Nachdem die Fahrerassistenzfunktion nur für bestimmte Betriebsbereiche/Betriebszustände vorgesehen ist, existiert üblicherweise auch wenigstens ein Deaktivierungskriterium, bei dessen Erfüllung die Fahrerassistenzfunktion wieder deaktiviert wird, wofür bei mehreren Deaktivierungskriterien üblicherweise die Erfüllung eines einzigen Deaktivierungskriteriums ausreicht und gegebenenfalls eine Fahrübernahme als Vorwarnung an den Fahrer ausgegeben werden kann. Ein Beispiel für ein solches Fahrerassistenzsystem ist ein Stauassistenzsystem, bei dem die Fahrerassistenzfunktion "Staupilot" verfügbar ist, das bedeutet eine wenigstens teilweise automatische Führung des Kraftfahrzeugs, insbesondere Längsführung und/oder Querführung innerhalb eines Staus, also bei niedrigen Geschwindigkeiten.

Bei derartigen Fahrerassistenzsystemen, die nicht wie einige andere Fahrerassistenzsysteme zu quasi jedem beliebigen Zeitpunkt durch einen Fahrer aktiviert werden können, existiert teilweise eine große Anzahl von Aktivierungshindernissen, die durch einen Fahrer nicht immer überschaubar sind. Bei einem Stauassistenzsystem mit einer Staupilot-Funktion sind Aktivierungsverhinderungsgründe beispielsweise, dass kein Vorausfahrzeug erkannt wurde, keine Spurmarkierungen erkannt wurden, das Vorausfahrzeug schneller als 60 km/h fährt, der falsche Straßentyp vorliegt (keine Autobahn), Fußgänger im Umfeld erkannt wurden, eine Mautstation vorausliegt und viele mehr. Um dem Fahrer nicht zu oft "unnötigerweise" eine Aktivierung versuchen zu lassen, wurde vorgeschlagen, diesem anzuzeigen, dass ein Zustand erreicht ist, in dem die wenigstens eine Aktivierungsbedingung erfüllt ist, mithin kein Aktivierverhinderungsgrund mehr vorliegt. Es wird also eine Aktivierbarkeitsinformation, beispielsweise innerhalb einer Instrumententafel und/oder eines Kombinationsdisplays und/oder einer sonstigen Anzeigenvorrichtung, ausgegeben, beispielsweise eine Verfügbarkeits-Anzeige "Stauassistent verfügbar".

Hierbei ist problematisch, dass durch die Vielzahl an verschiedenen Aktivierungsverhinderungsgründen, die sich beispielsweise entlang einer Fahrstrecke teilweise häufig und schnell ändern können (beispielsweise Vorausfahrzeug, Fahrbahnmarkierungen), es dazu kommen kann, dass die Aktivierungsinformation nur äußerst kurz angezeigt wird und/oder eine gerade aktivierte Fahrerassistenzfunktion wieder deaktiviert wird. Dies kann zu einer Verärgerung des Fahrers führen, da er die Nutzbarkeit des Fahrerassistenzsystems nicht sinnvoll vorhersehen kann. Beispielsweise bei Weiterbildungen solcher Fahrerassistenzsysteme wie einem "Autobahnpilot" und/oder "Stadtstaupilot" wird sich dieses Problem verschärfen, nachdem weitere Aktivierungsverhinderungsgründe hinzukommen, beispielsweise, dass kein Standstreifen erkannt wurde, dass keine Geschwindigkeitsbeschränkung vorausliegt, dass eine Ampel/ein Zebrastreifen vorausliegt und dergleichen.

In diesem Kontext offenbart WO 2015/049231 A1 ein Verfahren für ein Fahrerassistenzsystem eines Fahrzeugs, welches insbesondere eine Autopilotfunktion realisiert. Dabei wird vorgeschlagen, einen Abstand zwischen einer aktuellen Position des Fahrzeugs und dem Beginn eines Autopilotstreckenabschnitt auszugeben, sodass dem Fahrer auf einfache Art und Weise dargestellt wird, wann die Autopilotfunktion verfügbar sein wird. Auch eine Länge des Autopilotstreckenabschnitts kann bestimmt und ausgegeben werden, beispielsweise in Textform als Kilometerangabe, in Textform als eine voraussichtliche Autopilotfahrzeit, als Symbol oder als grafische Darstellung des geplanten Streckenverlaufs mit dem darin markierten Autopilotstreckenabschnitt.

Der Erfindung liegt die Aufgabe zu Grunde, die Information des Fahrers hinsichtlich nur bedingt betreibbarer Fahrerassistenzfunktionen weiter zu verbessern.

Zur Lösung dieser Aufgabe ist bei einem Verfahren der eingangs genannten Art erfindungsgemäß vorgesehen, dass zu der voraussichtlichen Aktivitätszeit ein Verlässlichkeitswert der Aktivitätszeit bestimmt und die Ausgabe der Aktivierbarkeitsinformation und/oder der Aktivitätszeit in Abhängigkeit des Verlässlichkeitswertes angepasst wird.

Erfindungsgemäß wird vorgeschlagen, dem Fahrer nicht nur zu ermöglichen, einzuschätzen, wie lange die Fahrerassistenzfunktion voraussichtlich betrieben werden kann, sondern dieser voraussichtlichen Aktivitätszeit auch eine von einem Verlässlichkeitswert abhängige Verlässlichkeitsinformation zuzuordnen, sodass der Nutzen der voraussichtlichen Aktivitätszeit (welche im Übrigen auch bei bereits aktivierter Fahrerassistenzfunktion angezeigt werden kann) deutlich erhöht. Ein derartiger Verlässlichkeitswert kann auch als Zuverlässigkeitsmaß bezeichnet werden. Dem Fahrer wird also eine breitere Entscheidungsgrundlage bereitgestellt, ob er die Fahrerassistenzfunktion bei Verfügbarkeit tatsächlich aktivieren möchte, auch unter Berücksichtigung gegebenenfalls vorhandener Unsicherheiten, die beispielsweise darauf beruhen können, dass ein sehr lebhaftes Kraftfahrzeugumfeld vorliegt, welches den plötzlichen Eintritt einer Deaktivierungsbedingung wahrscheinlicher erscheinen lässt, während die Bestimmung der voraussichtlichen Aktivitätszeit bevorzugt auf ortsfesten Umgebungsmerkmalen, die beispielsweise aus digitalen Kartenmaterial abgerufen werden können, beruht, welche zur Erfüllung einer Deaktivierungsbedingung führen, beispielsweise dem Ende eines Staus und/oder eines Straßentyps, für den die Fahrerassistenzfunktion konzipiert ist.

Mithin kann der Fahrer insgesamt besser einschätzen, ob es sich in der aktuellen Fahrsituation für ihn lohnt, die pilotierte Fahrfunktion einzuschalten. Hierzu wird die Deaktivierbarkeitsinformation um Zusatzinformation ergänzt, die anzeigen, wie lange die Fahrerassistenzfunktion bei einer Aktivierung in diesem Moment voraussichtlich verfügbar sein wird und mit welchem Verlässlichkeitswert diese voraussichtliche Aktivitätszeit bestimmt wurde.

Vorzugsweise wird als Fahrerassistenzsystem ein zur wenigstens teilweise automatischen Führung des Kraftfahrzeugs ausgebildetes Fahrerassistenzsystem verwendet, insbesondere ein Stauassistenzsystem mit einem Staupiloten als Fahrerassistenzfunktion.

Eine zweckmäßige Weiterbildung der vorliegenden Erfindung sieht vor, dass die voraussichtliche Aktivitätszeit nur bei Unterschreitung eines ersten Schwellwerts für die voraussichtliche Aktivitätszeit und/oder die Aktivierbarkeitsinformation nur bei Überschreitung eines zweiten, kleiner als der erste Schwellwert gewählten Schwellwerts durch die voraussichtliche Aktivitätszeit angezeigt wird. Hierdurch sind zwei Erweiterungen beschrieben, die sowohl gleichzeitig als auch als alternativ realisiert werden können. Zum einen wird vorgeschlagen, die komplette Aktivierbarkeitsinformation erst dann zur Anzeige zu bringen, wenn eine bestimmte Mindest-Aktivitätszeit, beispielsweise als zweiter Schwellwert im Bereich von 1 bis 3, bevorzugt 2, Minuten zur Verfügung steht. Hierdurch wird erreicht, dass weniger unnötige kurze Verfügbarkeiten angezeigt werden, was zur Beruhigung der Anzeige führt und sicherstellt, dass der Fahrer auch einen lohnenden Zeitraum mit der Fahrerassistenzfunktion fahren kann. Dabei ist jedoch zu beachten, dass bei einer derartigen Ausgestaltung die Gesamt-Verfügbarkeitszeit der Fahrerassistenzfunktion reduziert wird. Vorteilhaft kann es ferner sein, wenn die voraussichtliche Aktivitätszeit nur dann angezeigt wird, wenn sie einen ersten Schwellwert unterschreitet, der bei Vorsehen eines zweiten Schwellwerts größer als dieser zweite Schwellwert zu wählen ist. Dem liegt die Erkenntnis zu Grunde, dass der Verlässlichkeitswert, also das Zuverlässigkeitsmaß, bei hohen voraussichtlichen Aktivitätszeiten relativ niedrig sein wird, weshalb die Anzeige dann wenig verlässlich erscheint. Daher wird vorgeschlagen, dass bei hohen Werten für die voraussichtliche Aktivitätszeit zunächst eine voraussichtliche Aktivitätsstrecke, beispielsweise in "km", angegeben wird, und erst ab einer bestimmten, verlässlichen, voraussichtlichen Aktivitätszeit auf die Anzeige der voraussichtlichen Aktivitätsfahrzeit zu wechseln. Mit anderen Worten kann also vorgesehen sein, dass bei Nichtunterschreitung des ersten Schwellwerts anstatt der Aktivitätszeit eine voraussichtliche Aktivitätsstrecke angezeigt wird.

In einer zweckmäßigen Weiterbildung können der erste und/oder der zweite Schwellwert in Abhängigkeit des Verlässlichkeitwertes gewählt werden. Wird beispielsweise festgestellt, dass auch längere voraussichtliche Aktivierungszeiten mit einem hohen Verlässlichkeitswert ermittelbar sind, kann entsprechend der erste Schwellwert höher gesetzt werden, um auch für längere voraussichtliche Aktivierungszeiten bei der Ausgabe der voraussichtlichen Aktivierungszeit zu verbleiben. Hinsichtlich des zweiten Schwellwerts kann beispielsweise bei niedrigen Verlässlichkeitswerten auch eine längere voraussichtliche Aktivierungszeit zur Folge haben, dass die Fahrerassistenzfunktion recht schnell wieder deaktiviert wird, sodass hier zur Sicherheit die Ausgabe der Aktivierbarkeitsinformation weitergehend unterdrückt werden kann, mithin der zweite Schwellwert erhöht werden kann.

In konkreter Ausgestaltung der vorliegenden Erfindung kann vorgesehen sein, dass eine Einfärbung und/oder eine Anpassung der Darstellungsgröße der dargestellten voraussichtlichen Aktivitätszeit und/oder der Aktivierbarkeitsinformation und/oder eines bei der Ausgabe verwendeten weiteren Ausgabeelements und/oder eine Darstellung eines weiteren Ausgabeelements in Abhängigkeit der Verlässlichkeitsinformation erfolgt. Es existieren also eine Vielzahl weiterer konkreter Möglichkeiten, die Informationsausgabe in Abhängigkeit des Verlässlichkeitwertes zu modifizieren, um die in dem Verlässlichkeitswert erhaltene Verlässlichkeitsinformation einem Fahrer zu vermitteln. Beispielsweise kann der Verlässlichkeitswert eine Auswirkung auf die Schriftgröße haben, sodass bei kleinerer Schriftgröße, in der die voraussichtliche Aktivitätszeit ausgegeben wird, von einer kleineren Verlässlichkeit ausgegangen werden kann. Bevorzugt ist allerdings eine Einfärbung ausgegebener Informationen, wobei beispielsweise eine grüne Einfärbung eine hohe Zuverlässigkeit ausdrückt, eine gelbe, weiße und/oder rote Einfärbung für geringere Zuverlässigkeiten, mithin Verlässlichkeitswerte, stehen kann. Möglich ist es ferner, Zusatzelemente einzublenden, beispielsweise je nach Verlässlichkeitswert die voraussichtliche Aktivitätszeit mit Rahmen oder ohne Rahmen anzuzeigen. Auch Symbolgrößen können in Abhängigkeit des Verlässlichkeitwertes angepasst werden.

In einer besonders vorteilhaften Ausgestaltung der vorliegenden Erfindung kann vorgesehen sein, dass bei einem einen Grenzwert unterschreitenden Verlässlichkeitswert statt einer voraussichtlichen Aktivitätszeit Grenzen eines sich um die voraussichtliche Aktivitätszeit erstreckenden Aktivitätszeitintervalls angezeigt werden, wobei die Grenzen insbesondere in Abhängigkeit des Verlässlichkeitwerts bestimmt werden. Insbesondere dann, wenn der Verlässlichkeitswert Erwartungswerte für Schwankungen angibt, ist er unmittelbar geeignet, um Grenzen eines solchen Aktivitätszeitintervalls zu ermitteln. Statt einer Angabe der ermittelten voraussichtlichen Aktivitätszeit wird in einer Analogie mithin das von den "Fehlerbalken" abgedeckte Aktivitätszeitintervall zur Anzeige gebracht, sodass beispielsweise statt "3 Minuten" als Angabe "2 bis 4 Minuten" ausgegeben werden kann.

Der Verlässlichkeitswert kann in Abhängigkeit von den Eingangsdaten für die Ermittlung der voraussichtlichen Aktivitätszeit zugeordneten Gütewerten ermittelt werden, insbesondere durch Fehlerrechnung für den Ermittlungsweg der voraussichtlichen Aktivitätszeit. Dies entspricht einer grundsätzlich bekannten, üblichen Ermittlung eines Zuverlässigkeitmaßes, wobei derartige Gütewerte üblicherweise verfügbar sind, beispielsweise als Messgenauigkeiten bei Sensoren und/oder bei Datenbanken den entsprechenden Inhalten zugeordnet, was auch für digitales Kartenmaterial, beispielsweise eines Navigationssystems des Kraftfahrzeugs, gilt.

Besonders bevorzugt ist es jedoch, wenn der Verlässlichkeitswert, insbesondere zusätzlich, in Abhängigkeit von insbesondere von Umgebungssensoren des Kraftfahrzeugs aufgenommenen Umgebungsdaten und/oder Bediendaten über Bedienaktionen des Fahrers und/oder Wetterdaten bestimmt wird. Derartige Zusatzdaten können beispielsweise eingesetzt werden, um Wahrscheinlichkeitswerte für die Erfüllung von nicht ortsbezogenen Deaktivierungskriterien zu ermitteln. Beschäftigt sich das Fahrerassistenzsystem beispielsweise mit der teilweise oder vollständig automatischen Führung des Kraftfahrzeugs, kann Nebel auf eine schlechte Qualität von Umgebungsdaten der Umgebungssensoren hindeuten, sodass dort gegebenenfalls eine Grenze der Fahrerassistenzfunktion erreicht wird. Ähnliches gilt beispielsweise hinsichtlich zu glatten Straßen. Die Anwesenheit einer Vielzahl anderer Kraftfahrzeuge und deren Verkehrsverhalten, wie es ebenso durch Umgebungsdaten beschrieben werden kann, gibt beispielsweise Hinweise darauf, wie dynamisch sich die aktuelle Fahrsituation verändern kann. Schließlich sind auch Bedieninformationen des Fahrers nützlich, beispielsweise eingestellte Wunschgeschwindigkeiten, Blinkerbetätigungen und dergleichen. Auch aus den Umgebungsdaten und/oder sonstigen Zusatzdaten abgeleitete Informationen können nützlich sein, beispielsweise eine aktuell befahrene Fahrspur, ob Fahrbahnmarkierungen vorliegen, etc.

Bezüglich der Ermittlung der voraussichtlichen Aktivitätszeit kann vorgesehen sein, dass die Position von ortsfesten, zur Erfüllung wenigstens eines des wenigstens einen Deaktivierungskriteriums führenden Umgebungsmerkmalen beschreibende Merkmalsdaten und/oder den weiteren Weg des Kraftfahrzeugs beschreibende Streckendaten und/oder den Verkehrsfluss, insbesondere entlang des weiteren Weges, beschreibende Verkehrsflussdaten und/oder von Sensoren des Kraftfahrzeugs aufgenommene Umgebungsdaten als Eingangsdaten verwendet werden. In einer konkreten, bevorzugten Ausbildung kann vorgesehen sein, dass zunächst eine Restfahrstrecke bis zu einem nächstgelegenen der Umgebungsmerkmale und hierzu ein voraussichtliches Geschwindigkeitsprofil ermittelt wird, woraus die voraussichtliche Aktivitätszeit als Fahrtzeit mit dem voraussichtlichen Geschwindigkeitsprofil entlang der Restfahrtstrecke ermittelt wird. Bezüglich der Ermittlung des voraussichtlichen Geschwindigkeitsprofils kann vorgesehen sein, dass in einer digitalen Karte den Streckenabschnitten der Restfahrtstrecke zugeordnete Geschwindigkeitsdaten und/oder Verkehrsflussdaten verwendet werden. In einem Ausführungsbeispiel kann also zunächst anhand von ortsgebundenen Informationen aus einer digitalen Karte beziehungsweise prädiktiven Streckendaten (Kreuzungen, Ampeln, Abzweigungen und dergleichen) zunächst das nächste ortsbezogene Umgebungsmerkmal ermittelt werden, bei dem eine Deaktivierungsbedingung erfüllt wäre. Zu diesem Ort kann die Restfahrtstrecke bestimmt werden. Entlang der Restfahrtstrecke wird dann das voraussichtliche Geschwindigkeitsprofil bestimmt, wozu wiederum Informationen einer digitalen Karte herangezogen werden können, beispielsweise dort eingetragene Geschwindigkeitsbegrenzungen, typische Durchschnittsgeschwindigkeiten und dergleichen. Zudem können hier aktuelle Verkehrsflussdaten einfließen, die beispielsweise auch drahtlos von einer Servereinrichtung beziehungsweise aus dem Internet erhalten werden können. Aus der Restfahrtstrecke und dem potenziellen Geschwindigkeitsprofil ergibt sich dann eine Restfahrzeit.

Neben dem Verfahren betrifft die Erfindung auch ein Kraftfahrzeug, aufweisend ein Fahrerassistenzsystem mit einem zur Durchführung des erfindungsgemäßen Verfahrens ausgebildeten Steuergerät. Sämtliche Ausführungen bezüglich des erfindungsgemäßen Verfahrens lassen sich analog auf das erfindungsgemäße Kraftfahrzeug übertragen, mit welchem mithin ebenso die bereits genannten Vorteile erhalten werden können. Insbesondere weist das Kraftfahrzeug wenigstens eine Anzeigevorrichtung auf, über die die Aktivitätsinformation und/oder die voraussichtliche Aktivitätszeit ausgegeben werden können.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: einen Ablaufplan des erfindungsgemäßen Verfahrens,
- Fig. 2: eine mögliche erste Darstellung bei verlässlicher voraussichtlicher Aktivitätszeit,
- Fig. 3: eine mögliche zweite Darstellung bei weniger verlässlicher voraussichtlicher Aktivitätszeit,
- Fig. 4: eine mögliche Darstellung mit Anzeige einer Aktivitätsstrecke, und
- Fig. 5: eine Prinzipskizze eines erfindungsgemäßen Kraftfahrzeugs

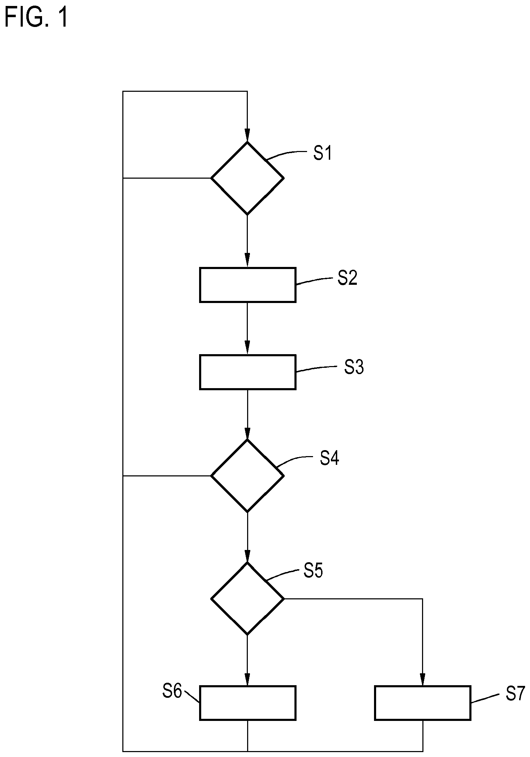

Fig. 1 zeigt einen Ablaufplan eines Ausführungsbeispiels des erfindungsgemäßen Verfahrens für den Betrieb eines Fahrerassistenzsystems, hier eines Stauassistenzsystems, dessen Fahrerassistenzfunktion ("Staupilot") nur dann, wenn eine Mehrzahl von Aktivierungsbedingungen erfüllt ist, fahrerseitig aktiviert werden kann und bei Eintritt wenigstens einer von mehreren Deaktivierungsbedingungen unter Ausgabe einer Fahrerübernahmeaufforderung wieder deaktiviert wird. Dem Fahrerassistenzsystem ist, insbesondere benachbart zu oder integriert mit einem Bedienelement zur Aktivierung der Fahrerassistenzfunktion, eine Anzeigevorrichtung zugeordnet.

In einem Schritt S1 des Verfahrens wird überprüft, ob alle Aktivierungsbedingungen erfüllt sind, eine Aktivierung der Fahrerassistenzfunktion durch den Fahrer also grundsätzlich möglich wäre. Ist dies nicht der Fall, werden die Aktivierungsbedingungen zyklisch weiter überprüft, bis eine Erfüllung vorliegt.

Bei erfüllten Aktivierungsbedingungen wird zu einem Schritt S2 fortgeschritten, in dem eine voraussichtliche Aktivitätszeit für den Fall, dass die Fahrassistenzfunktion unmittelbar aktiviert würde, bestimmt wird. Hierzu werden zunächst aus digitalem Kartenmaterial eines Navigationssystems des Kraftfahrzeugs beziehungsweise prädiktiven Streckendaten, die auch anderweitig erhalten werden können, beispielsweise aus mit Umgebungssensoren und/oder einer Kommunikationserrichtung erhaltenen Umgebungsdaten des Kraftfahrzeugs, Umgebungsmerkmale in der aktuellen Umgebung des Kraftfahrzeugs ermittelt, die zu einer Erfüllung einer Deaktivierungsbedingung für die Fahrerassistenzfunktion führen würden. Das nächste derartige Umgebungsmerkmal entlang der Route des Kraftfahrzeugs wird bestimmt und die Restfahrtstrecke bis zu diesem Umgebungsmerkmal wird ermittelt, was gegebenenfalls ausgelagert in das Navigationssystem erfolgen kann oder diesem gegebenenfalls ohnehin zu entnehmen ist, wenn das Navigationssystem gerade zur Zielführung genutzt wird. Entlang dieser Restfahrtstrecke wird dann das voraussichtliche Geschwindigkeitsprofil bestimmt, wozu wiederum Daten der digitalen Karte beziehungsweise prädiktive Streckendaten bezogen auf die Geschwindigkeit, also Geschwindigkeitsdaten, verwendet werden, beispielsweise eine Streckenabschnitten zugeordnete Durchschnittsgeschwindigkeit und/oder Geschwindigkeitsbegrenzungen. In das voraussichtliche Geschwindigkeitsprofil gehen ferner aktuelle Verkehrsflussdaten, die beispielsweise über die Kommunikationseinrichtung des Kraftfahrzeugs ermittelt werden können, ein. Aus der Restfahrtstrecke und dem Geschwindigkeitsprofil ergibt sich dann eine Restfahrtzeit, die als voraussichtliche Aktivitätszeit der Fahrerassistenzfunktion herangezogen wird.

In einem Schritt S3 wird zu der voraussichtlichen Aktivitätszeit ein Verlässlichkeitswert, also ein Zuverlässigkeitsmaß, bestimmt. Hierbei werden vorhandene Gütewerte der Eingangsdaten zur Ermittlung der voraussichtlichen Aktivitätszeit genauso herangezogen wie Zusatzdaten umfassend von Umgebungssensoren und der Kommunikationseinrichtung ermittelte Umgebungsdaten, Bediensignale des Fahrers beschreibende Bediendaten und Wetterdaten entlang der Strecke. Die Zusatzdaten werden dabei verwendet, um die Wahrscheinlichkeit der Erfüllung von nicht ortsbezogenen Deaktivierungskriterien anzugeben, welche Wahrscheinlichkeitswerte dann ebenso in den Verlässlichkeitswert eingehen.

In einem Schritt S4 wird dann überprüft ob die voraussichtliche Aktivitätszeit einen von dem Verlässlichkeitswert abhängigen zweiten Schwellwert unterschreitet. Bei zu kurzen voraussichtlichen Aktivitätszeiten kann eine Aktivierung der Fahrerassistenzfunktion als unrentabel angesehen werden, sodass dann wieder mit dem Schritt S1 fortgefahren wird, ohne dass eine die Aktivierbarkeit der Fahrerassistenzfunktion anzeigende Aktivierbarkeitsinformation ausgegeben wird. Der zweite Schwellwert kann im Bereich äußerst kurzer Zeiten liegen, beispielsweise kleiner als eine Minute oder sogar kleiner als 30 Sekunden sein.

In einem Schritt S5 wird überprüft ob die voraussichtliche Aktivitätszeit kleiner als ein erster Schwellwert ist, der ebenso abhängig von dem Verlässlichkeitswert, jedoch höher als der zweite Schwellwert, gewählt ist. Dieser zweite Schwellwert liegt insbesondere im einstelligen Minutenbereich und ist darin begründet, dass der Verlässlichkeitswert für längere voraussichtliche Aktivitätszeiten häufig äußerst klein wird, sodass dann eine Anzeige einer voraussichtlichen Aktivitätsstrecke zweckmäßiger erscheint.

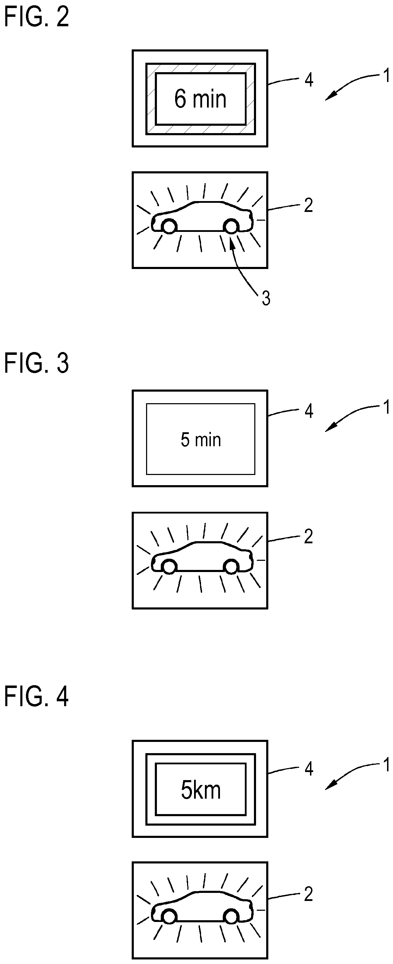

Ist die voraussichtliche Aktivitätszeit kleiner als der erste Schwellwert (und größer als der zweite Schwellwert), erfolgt in einem Schritt S6 unter Nutzung der Anzeigevorrichtung die Ausgabe der die Aktivierbarkeit der Fahrerassistenzfunktion anzeigenden Aktivierbarkeitsinformation und der voraussichtlichen Aktivitätszeit, wobei diese Ausgabe auf Grund des Verlässlichkeitswerts modifiziert wird, wie im Folgenden im Hinblick auf die Figuren 2 bis 4 näher erläutert werden wird. Im Fall der Überschreitung des ersten Schwellwerts im Schritt S5 wird zum Schritt S7 verzweigt, in dem statt der voraussichtlichen Aktivitätszeit eine voraussichtliche Aktivitätsstrecke, insbesondere als die Länge der Restfahrtstrecke, ausgegeben wird. Dann wird in beiden Fällen wieder zum Schritt S1 zurückgekehrt.

Fig. 2 zeigt eine mögliche Ausgabe auf einer Anzeigevorrichtung 1, welche vorliegend ein Bedienelement 2 mit einem hinterleuchtbaren Symbol 3 zur fahrerseitigen Aktivierung der Fahrerassistenzfunktion und ein Display 4, das dem Bedienelement 2 benachbart positioniert ist, umfasst. Selbstverständlich sind auch andere Ausgestaltungen möglich, beispielsweise die Verwendung eines gemeinsamen Touch-Displays, die Verwendung einer von dem Bedienelement getrennten Anzeige und dergleichen.

Fig. 2 zeigt eine Darstellungsinformation, in der die Fahrerassistenzfunktion aktivierbar ist, weswegen das Symbol 3, wie angedeutet, grün hinterleuchtet ist. Es wurde eine voraussichtliche Aktivitätszeit von 6 Minuten bestimmt, wobei ein hoher Verlässlichkeitswert vorliegt. Die voraussichtliche Aktivitätszeit wird daher in Grün, umgeben von einem dicken grünen Rahmen, in einer großen Schriftgröße auf dem Display 4 dargestellt.

Fig. 3 zeigt eine Situation, in der wiederum Aktivierbarkeit vorliegt, allerdings die voraussichtliche Aktivitätszeit von 5 Minuten mit einem deutlich geringeren Verlässlichkeitswert ermittelt wurde. Entsprechend erfolgt die Darstellung nicht mehr in Grün, sondern in Gelb, der Rahmen ist deutlich dünner und auch die Schriftgröße ist deutlich reduziert. Dem Fahrer wird so bewusst, dass die Information auf dem Display 4 weniger verlässlich ist.

Alternativ hierzu ist es auch möglich, statt der voraussichtlichen Aktivitätszeit bei niedrigem Verlässlichkeitswert auch ein Aktivitätszeitintervall mit aus dem Verlässlichkeitswert abgeleiteten Grenzen anzuzeigen, im obigen Beispiel, beispielsweise statt "5 Min" "4 bis 6 Min" anzugeben.

Fig. 4 zeigt schließlich einen Fall, in dem im Schritt S5 der erste Schwellwert überschritten ist, sodass statt der voraussichtlichen Aktivitätszeit die voraussichtliche Aktivitätsstrecke, hier 5 Kilometer, dargestellt wird, dies alles vorliegend mit einem neutralen Rahmen in Weiß.

In einem Fall, in dem die Aktivierungsbedingungen nicht erfüllt sind, kann das Display 4 deaktiviert sein und das Symbol 3 nicht hinterleuchtet.

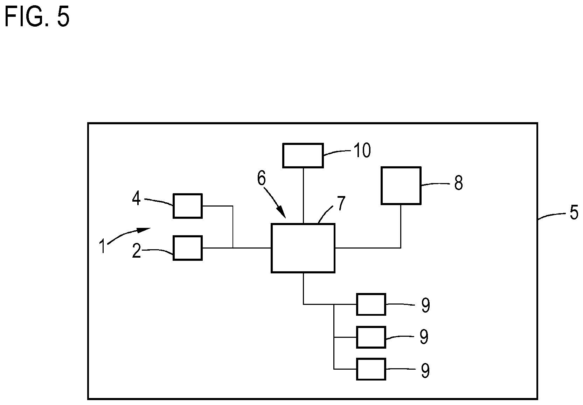

Fig. 5 zeigt schließlich eine Prinzipskizze eines erfindungsgemäßen Kraftfahrzeugs 5, welches das Fahrerassistenzsystem 6 mit einem zugeordneten Steuergerät 7 aufweist. Das Steuergerät 7 ist zur Durchführung des erfindungsgemäßen Verfahrens ausgebildet und entsprechend mit der Anzeigevorrichtung 4 verbunden. Weitere Daten erhält das Steuergerät 7 beispielsweise von einem Navigationssystem 8, Umgebungssensoren 9 und einer Kommunikationsvorrichtung 10 des Kraftfahrzeugs 5.

## Patentansprüche

1. Verfahren zum Betrieb eines eine Fahrerassistenzfunktion realisierenden Fahrerassistenzsystems (6) eines Kraftfahrzeugs (5), welche Fahrerassistenzfunktion nur bei Erfüllung wenigstens eines Aktivierungskriteriums fahrerseitig aktivierbar ist und bei Erfüllung wenigstens eines Deaktivierungskriteriums automatisch deaktiviert wird, wobei bei Aktivierbarkeit des Fahrerassistenzsystems (6) eine die Aktivierbarkeit anzeigende Aktivierbarkeitsinformation an den Fahrer ausgegeben wird und eine voraussichtliche Aktivitätszeit bis zum Eintritt eines Deaktivierungskriteriums ermittelt und gemeinsam mit der Aktivierbarkeitsinformation ausgegeben wird,
**dadurch gekennzeichnet,**
**dass** zu der voraussichtlichen Aktivitätszeit ein Verlässlichkeitswert der Aktivitätszeit bestimmt und die Ausgabe der Aktivierbarkeitsinformation und/oder der Aktivitätszeit in Abhängigkeit des Verlässlichkeitswertes angepasst wird.

2. Verfahren nach Anspruch 1,
**dadurch gekennzeichnet,**
**dass** die voraussichtliche Aktivitätszeit nur bei Unterschreitung eines ersten Schwellwerts für die voraussichtliche Aktivitätszeit und/oder die Aktivierbarkeitsinformation nur bei Überschreitung eines zweiten, kleiner als der erste Schwellwert gewählten Schwellwerts für die voraussichtliche Aktivitätszeit angezeigt wird.

3. Verfahren nach Anspruch 2,
**dadurch gekennzeichnet,**
**dass** der erste und/oder der zweite Schwellwert in Abhängigkeit des Verlässlichkeitswertes gewählt wird.

4. Verfahren nach Anspruch 2 oder 3,
**dadurch gekennzeichnet,**
**dass** bei Nichtunterschreitung des ersten Schwellwerts anstatt der Aktivitätszeit eine voraussichtliche Aktivitätsstrecke angezeigt wird.

5. Verfahren nach einem der vorangehenden Ansprüche,
**dadurch gekennzeichnet,**
**dass** eine Einfärbung und/oder eine Anpassung der Darstellungsgröße der dargestellten voraussichtlichen Aktivitätszeit und/oder der Aktivierbarkeitsinformation und/oder eines bei der Ausgabe verwendeten weiteren Ausgabeelements und/oder eine Darstellung eines weiteren Ausgabeelements in Abhängigkeit des Verlässlichkeitswertes erfolgt.

6. Verfahren nach einem der vorangehenden Ansprüche,
**dadurch gekennzeichnet,**
**dass** bei einen Grenzwert unterschreitendem Verlässlichkeitswert statt einer voraussichtlichen Aktivitätszeit Grenzen eines sich um die voraussichtliche Aktivitätszeit erstreckenden Aktivitätszeitsintervalls angezeigt werden, wobei die Grenzen insbesondere in Abhängigkeit des Verlässlichkeitswerts bestimmt werden.

7. Verfahren nach einem der vorangehenden Ansprüche,
**dadurch gekennzeichnet,**
**dass** der Verlässlichkeitswert in Abhängigkeit von den Eingangsdaten für die Ermittlung der voraussichtlichen Aktivitätszeit zugeordneten Gütewerten ermittelt wird, insbesondere durch Fehlerrechnung für den Ermittlungsweg der voraussichtlichen Aktivitätszeit, und/oder, insbesondere zusätzlich, insbesondere von Umgebungssensoren (9) des Kraftfahrzeugs (5) aufgenommene Umgebungsdaten und/oder Bediendaten über Bedienaktionen des Fahrers und/oder Wetterdaten berücksichtigt werden.

8. Verfahren nach einem der vorangehenden Ansprüche,
**dadurch gekennzeichnet,**
**dass** als Eingangsdaten zur Ermittlung der voraussichtlichen Aktivitätszeit die Position von ortsfesten, zur Erfüllung wenigstens eines des wenigstens einen Deaktivierungskriteriums führenden Umgebungsmerkmalen beschreibende Merkmalsdaten und/oder den weiteren Weg des Kraftfahrzeugs (5) beschreibende Streckendaten und/oder den Verkehrsfluss, insbesondere entlang des weiteren Weges, beschreibende Verkehrsflussdaten und/oder von Sensoren des Kraftfahrzeugs (5) aufgenommene Umgebungsdaten verwendet werden.

9. Verfahren nach Anspruch 8,
**dadurch gekennzeichnet,**
**dass** zunächst eine Restfahrstrecke bis zu einem nächstgelegenen der Umgebungsmerkmale und hierzu ein voraussichtliches Geschwindigkeitsprofil ermittelt wird, woraus die voraussichtliche Aktivitätszeit als Fahrtzeit mit dem voraussichtlichen Geschwindigkeitsprofil entlang der Restfahrstrecke ermittelt wird.

10. Kraftfahrzeug (5), aufweisend ein Fahrerassistenzsystem (6) mit einem zur Durchführung eines Verfahrens nach einem der vorangehenden Ansprüche ausgebildeten Steuergerät (7).

## Claims

1. Method for operating a driver assistance system (6) of a motor vehicle (5) performing a driver assistance function, which driver assistance function can only be activated by the driver when at least one activation criterion is met and is automatically deactivated if at least one deactivation criterion is met, wherein if the driver assistance system (6) can be activated, an activability information item indicating the activability is output to the driver and an expected activity period is determined before a deactivation criterion occurs and is output together with the activability information item,
**characterised in that**
a reliability value of the activity period is determined for the expected activity period and the output of the activability information item and/or the activation period is adjusted as a function of the reliability value.

2. Method according to claim 1,
**characterised in that**
the expected activity period is only displayed if a first threshold value for the expected activity period is not reached and/or the activability information item is only displayed if a second threshold value for the expected activity period, selected to be lower than the first threshold value, is exceeded.

3. Method according to claim 2,
**characterised in that**
the first and/or the second threshold value is selected as a function of the reliability value.

4. Method according to claim 2 or 3,
**characterised in that**
if the first threshold value is not fallen below, instead of the activity period, an expected activity distance is displayed.

5. Method according to any of the preceding claims,
**characterised in that**
a colouring and/or an adaptation of the display size of the displayed expected activity period and/or the activability information item and/or a further output element used for the output and/or a display of a further output element takes place as a function of the reliability value.

6. Method according to any of the preceding claims,
**characterised in that**
if a reliability value falls below a limit value, limits of an activity period interval extending around the expected activity period are displayed instead of an expected activity period, the limits being determined in particular as a function of the reliability value.

7. Method according to any of the preceding claims,
**characterised in that**
the reliability value is determined as function of quality values assigned to the input data for determining the expected activity period, in particular by error calculation of the determined path of the expected activity period and/or, in particular in addition, environmental data recorded in particular by environmental sensors (9) of the motor vehicle (5) and/or operating data about operating actions of the driver and/or weather data are taken into account.

8. Method according to any of the preceding claims,
**characterised in that**
as input data for determining the expected activity period, characteristic data describing the position of fixed environment features leading to at least one of the at least one deactivation criterion being met and/or route data describing the further path of the motor vehicle (5) and/or traffic flow data describing the traffic flow, in particular along the further path and/or environmental data recorded by sensors of the motor vehicle (5) are used.

9. Method according to claim 8,
**characterised in that**
firstly a remaining travel distance to a nearest characteristic of the environment and for this purpose an expected speed profile are determined, from which the expected activity period is determined as travel time with the expected speed profile along the remaining travel distance.

10. Motor vehicle (5) having a driver assistance system (6) with a control device (7) designed for performing a method according to any of the preceding claims.

## Revendications

1. Procédé de fonctionnement d'un système d'assistance au conducteur (6) réalisant une fonction d'assistance au conducteur d'un véhicule automobile (5), laquelle fonction d'assistance au conducteur est activable côté conducteur seulement lorsqu'au moins un critère d'activation est satisfait et est automatiquement désactivé lorsque l'au moins un critère de désactivation est satisfait, dans lequel pour l'aptitude à l'activation du système d'assistance au conducteur (6), une information d'aptitude à l'activation affichant l'aptitude à l'activation est fournie au conducteur et un temps d'activité estimé est déterminé jusqu'à l'entrée d'un critère de désactivation et fourni conjointement avec l'information d'aptitude à l'activation,
**caractérisé en ce**
**qu'**une valeur de fiabilité du temps d'activité est déterminée pour le temps d'activité estimé et la fourniture de l'information d'aptitude à l'activation et/ou du temps d'activité est adaptée en fonction de la valeur de fiabilité.

2. Procédé selon la revendication 1,
**caractérisé en ce**
**que** le temps d'activité estimé est affiché seulement lorsque le temps d'activité estimé est inférieur à une première valeur seuil et/ou l'information d'aptitude à l'activation est affichée seulement lorsque le temps d'activité estimé est supérieur à une seconde valeur seuil choisie plus petite que la première valeur seuil.

3. Procédé selon la revendication 2,
**caractérisé en ce**
**que** la première et/ou la seconde valeur seuil est choisie en fonction de la valeur de fiabilité.

4. Procédé selon la revendication 2 ou 3,
**caractérisé en ce**
**que** lorsque la première valeur seuil n'est pas atteinte, une ligne d'activité estimée est affichée à la place du temps d'activité.

5. Procédé selon l'une quelconque des revendications précédentes,
**caractérisé en ce**
**qu'**une coloration et/ou une adaptation de la grandeur de représentation du temps d'activité estimé représenté et/ou de l'information d'aptitude à l'activation et/ou d'un autre élément de fourniture utilisé lors de la fourniture et/ou une représentation d'un autre élément de fourniture est effectuée en fonction de la valeur de fiabilité.

6. Procédé selon l'une quelconque des revendications précédentes,
**caractérisé en ce**
**que** lorsqu'une valeur de fiabilité est inférieure à une valeur limite, des limites d'un intervalle de temps d'activité s'étendant autour du temps d'activité estimé sont affichées à la place d'un temps d'activité estimé, dans lequel les limites sont déterminées en particulier en fonction de la valeur de fiabilité.

7. Procédé selon l'une quelconque des revendications précédentes,
**caractérisé en ce**
**que** la valeur de fiabilité est déterminée en fonction des données d'entrée pour la détermination des valeurs de qualité associées au temps d'activité estimé, en particulier par calcul d'erreur pour la voie de détermination du temps d'activité estimé, et/ou, en particulier en outre, des données d'environnement prises en particulier par des capteurs d'environnement (9) du véhicule automobile (5) et/ou des données de commande sur des actions de commande du conducteur et/ou des données météorologiques sont prises en considération.

8. Procédé selon l'une quelconque des revendications précédentes,
**caractérisé en ce**
**que** des données de caractéristiques décrivant la position de caractéristiques d'environnement fixes menant à la satisfaction d'au moins un critère de désactivation sont utilisées comme données d'entrée pour la détermination du temps d'activité estimé et/ou des données de ligne décrivant l'autre voie du véhicule automobile (5) et/ou des données de flux de trafic décrivant le flux de trafic, en particulier le long de l'autre voie et/ou des données d'environnement prises par des capteurs du véhicule automobile (5).

9. Procédé selon la revendication 8,
**caractérisé en ce**
**que** tout d'abord un itinéraire restant jusqu'à une plus proche des caractéristiques d'environnement et à cet effet un profil de vitesse estimé sont déterminés, à partir de quoi le temps d'activité estimé est déterminé comme temps de conduite avec le profil de vitesse estimé le long de l'itinéraire restant.

10. Véhicule automobile (5), présentant un système d'assistance au conducteur (6) avec un dispositif de commande (7) réalisé pour la réalisation d'un procédé selon l'une quelconque des revendications précédentes.
